# EUROPÄISCHE PATENTSCHRIFT

(11) **EP 3 338 129 B1**
(45) Veröffentlichungstag und Bekanntmachung des Hinweises auf die Patenterteilung: **11.05.2022**
(21) Anmeldenummer: 16757205.6
(22) Anmeldetag: 18.08.2016
(51) Int. Cl.: G02B 13/00, G02B 27/10, H04N 5/225, H04N 5/232, G02B 26/08

(54) **MULTIAPERTURABBILDUNGSVORRICHTUNG MIT OPTIKSUBSTRAT**
MULTI-APERTURE IMAGING DEVICE WITH OPTICAL SUBSTRATE
DISPOSITIF DE REPRÉSENTATION À OUVERTURES MULTIPLES AVEC SUBSTRAT OPTIQUE

(30) Priorität: 19.08.2015 DE 102015215833
(43) Veröffentlichungstag der Anmeldung: 27.06.2018
(73) Patentinhaber: Fraunhofer-Gesellschaft zur Förderung der angewandten Forschung e.V., 80686 München (DE)
(72) Erfinder: WIPPERMANN, Frank, 98617 Meiningen (DE); BRÜCKNER, Andreas, 07743 Jena (DE); BRÄUER, Andreas, 07646 Schlöben (DE); OBERDÖRSTER, Alexander, 07749 Jena (DE)
(74) Vertreter: König, Andreas Rudolf
(86) Internationale Anmeldenummer: PCT/EP2016/069641
(87) Internationale Veröffentlichungsnummer: WO 2017/029372

(56) Entgegenhaltungen:
- WO-A1-2014/168586
- WO-A1-2015/019772
- DE-A1-102011 081 408
- DE-A1-102013 209 819
- DE-A1-102013 209 823
- DE-B3-102014 213 371
- US-A1- 2010 328 471
- US-A1- 2011 141 585
- US-A1- 2015 109 468
- US-B1- 9 083 873

## Beschreibung

Die vorliegende Erfindung bezieht sich auf eine Multiaperturabbildungsvorrichtung mit einem einzeiligen Array von nebeneinander angeordneten optischen Kanälen.

Multiaperturabbildungsvorrichtungen mit linearer Kanalanordnung werden meist dann verwendet, wenn es auf eine möglichst geringe Bauhöhe ankommt. Die minimal erreichbare Bauhöhe eines Multiaperturabbildungssystems mit linearer Kanalanordnung wird meist durch die Linsendurchmesser vorgegeben. Die Bauhöhe soll den Linsendurchmesser möglichst nicht überschreiten. Werden einzelne, hintereinandergeschaltete Linsen für die Optik jedes Kanals genutzt, die beispielsweise durch Polymerspritzguss und/oder Glasprägen hergestellt werden können, werden allerdings Gehäusestrukturen verwendet, um die Linsen der Optiken zu fixieren. Solche Gehäusestrukturen befinden sich auch oberhalb und unterhalb der Linsen, wodurch die erwähnte Bauhöhe erhöht wird.

DE 10 2013 320 819 A1 beschreibt eine Vorrichtung mit einer optischen Struktur und Stegen zum Aufhängen von Linsen.

US 2011/0141585 A1 beschreibt ein Linsenmodul mit einer Basis und einer ersten und zweiten Linseneinheit. Die Basis definiert einen Empfängerraum.

US 9,083,873 B1 beschreibt Vorrichtungen und Verfahren zum Bereitstellen eine Mehr-Linsen-Funktionalität mit einem an mehrere optische Elemente gekoppelten geteilten Rahmen.

DE 10 2014 213 371 B3 beschreibt eine Vorrichtung zum Erfassen eines Objektbereichs mit einem flachen Gehäuse.

Die Aufgabe der vorliegenden Erfindung besteht deshalb darin, eine Multiaperturabbildungsvorrichtung zu schaffen, die es ermöglicht, dass die Multiaperturabbildungsvorrichtung eine kleinere Bauhöhe besitzt.

Diese Aufgabe wird durch den Gegenstand des unabhängigen Patentanspruchs 1 gelöst.

Die Erkenntnis der vorliegenden Erfindung besteht darin, dass eine geringere Bauhöhe einer Multiaperturabbildungsvorrichtung mit einzeiligem Array von nebeneinander angeordneten optischen Kanälen erzielbar ist, indem Linsen der Optiken der optischen Kanäle an einer Hauptseite durch einen oder mehrere Linsenhalter (76₁, 76₂, 76₃, 76₄) befestigt und über das Substrat mechanisch verbunden sind, d.h. gegenseitig fixiert, und indem das Substrat so positioniert wird, dass die Strahlengänge der Mehrzahl von optischen Kanälen hindurchverlaufen. Das Substrat kann ohne Weiteres transparent ausgeführt werden und stört somit nicht die Strahlengänge. Andererseits vermeidet die Platzierung des Substrats in den Strahlengängen eine Vergrößerung der Bauhöhe. Zudem kann das Substrat aus einem Material gebildet sein, das im Vergleich zu den Optiken selbst einen geringeren Ausdehnungskoeffizienten, größere Härte, größeren Elastizitäts- und/oder Torsionsmodul und allgemein von den Linsenmaterialien abweichende Materialkennwerte aufweist. Auf diese Weise ist es möglich, das Material für die Linsen an der Hauptseite des Substrats nach Gesichtspunkten auszuwählen, die kostengünstig eine ausreichende optische Qualität ermöglichen und das Material des Substrats nach Gesichtspunkten, wonach z.B. die Lage der Linsen der Optiken über Temperaturschwanken hinweg möglichst konstant bleibt. Beispielsweise könnten die Linsen, die durch die Linsenhalter an dem Substrat befestigt sind, durch Spritzguss individuell gefertigt sein und somit kostengünstig eine hohe optische Qualität und mithin geringe Formabweichung zur Sollform bei beispielsweise hoher Brechkraft, großer Pfeilhöhe, steilen Flankenwinkel und damit einhergehend eine kleine f-Zahl aufweisen. Kostengünstige Implementierungen könnten ebenfalls vorsehen, dass das Substrat zusätzlich Linsen an einer der erstgenannten Hauptseite abgewandten Hauptseite gebildet sind: Letztere könnten zu dem Substrat einstückig sein, oder durch Abformung wie z.B. mittels UV-Replikation hergestellt sein. Eine derartige Multiaperturabbildungsvorrichtung weist ferner einen Aktor zum translatorischen Bewegen des Substrats entlang der Strahlengänge der Mehrzahl von optischen Kanälen auf. Die Optiken sind auch relativ zu der Strahlumlenkvorrichtung in konstanter relativer Lage gehaltert; und der Aktor bewegt die Optiken zusammen mit der Strahlumlenkvorrichtung translatorisch entlang der optischen Achsen der Optiken.

Vorteilhafte Ausgestaltungen sind Gegenstand von abhängigen Patentansprüchen. Bevorzugte Ausführungsbeispiele der vorliegenden Anmeldung werden nachfolgend Bezug nehmend auf die Zeichnungen näher erläutert. Es zeigen:
- Fig. 1a: ein Raumbild einer Multiapertur- bzw. Multikanalabbildungsvorrichtung gemäß einem Ausführungsbeispiel;
- Fig. 1b: eine Draufsicht der Multiaperturabbildungsvorrichtung von Fig. 1a;
- Fig. 1c: eine Seitenschnittansicht durch einen optischen Kanal der Multiaperturabbildungsvorrichtung von Fig. 1a;
- Fig. 1d: ein Raumbild einer Multiaperturabbildungsvorrichtung gemäß einer Variante, bei der entlang der Zeilenerstreckungsrichtung die Kanaloptiken auf zwei Trägersubstrate aufgeteilt sind;
- Fig. 1e: eine Draufsicht einer Multiaperturabbildungsvorrichtung gemäß einer Variante, bei der das Trägersubstrat quer zu den Strahlengängen aus zwei Teilsubstraten zusammengefügt ist;
- Fig. 1f und g: eine Seitenschnittansicht und eine Draufsicht einer Multiaperturabbildungsvorrichtung gemäß einer Variante zu Fig. 1c und 1b, bei der die optischen Achsen der Kanäle eine Vorab-Divergenz aufweisen, um divergent in einer gemeinsamen Ebene parallel zur Zeilenerstreckungsrichtung zu verlaufen, so dass die Anzahl der Facetten mit paarweise unterschiedlicher Neigung verringert werden kann;
- Fig. 2: eine Draufsicht des einzeiligen Arrays von optischen Kanälen gemäß einer Alternative, wonach die Optiken der optischen Kanäle lediglich Linsen aufweisen, die über Abstandshalter an dem Substrat befestigt sind;
- Fig. 3a: eine Draufsicht eines einzeiligen Arrays von nebeneinander angeordneten optischen Kanälen gemäß einer Variante, bei der die Optiken benachbarter Kanäle über einen gemeinsamen Linsenhalter an dem Substrat montiert sind;
- Fig. 3b: eine Draufsicht eines einzeiligen Arrays von nebeneinander angeordneten optischen Kanälen gemäß einer Variante, bei der die Linsen der Optiken auf mehrere Trägersubstrate verteilt sind;
- Fig. 4: ein schematisches Raumbild einer Multiaperturabbildungsvorrichtung gemäß einem Ausführungsbeispiel, bei dem Einrichtungen zur Lageveränderung zwischen Bildsensor, einzeiligem Array von optischen Kanälen und Strahlumlenkvorrichtung vorhanden sind;
- Fig.5: ein Raumbild eines mobilen Geräts, um einen Verbau der Multiaperturabbildungsvorrichtung zu illustrieren; und
- Fig. 6: ein Raumbild eines mobilen Geräts, um einen Verbau zweier Multiaperturabbildungsvorrichtungen zu Stereoskopiezwecken zu illustrieren.

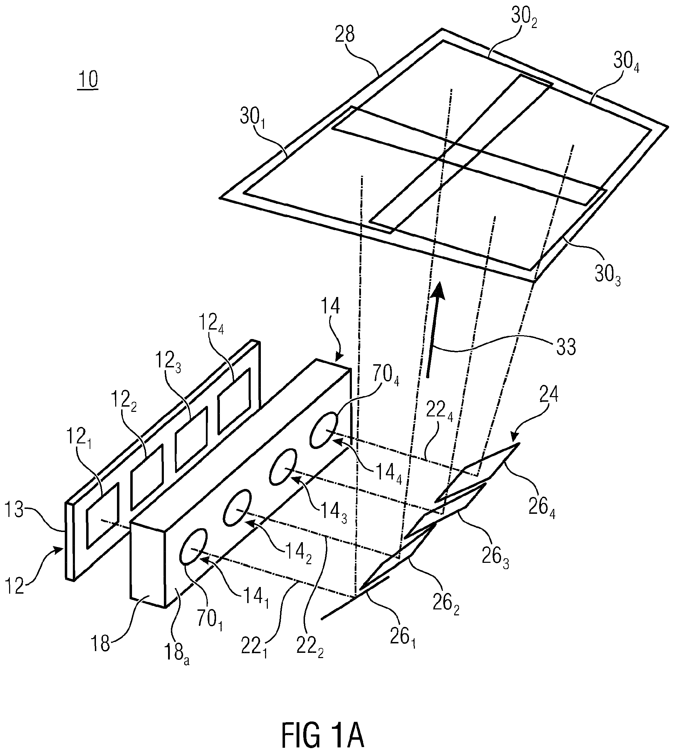

Fig. 1a-c zeigen eine Multiaperturabbildungsvorrichtung 10 gemäß einem Ausführungsbeispiel der vorliegenden Anmeldung. Die Multiaperturabbildungsvorrichtung 10 von Fig. 1a-c umfasst ein einzeiliges Array 14 von nebeneinander angeordneten optischen Kanälen 14₁ - 14₄. Jeder optische Kanal 14₁ - 14₄ umfasst eine Optik 16₁ - 16₄ zur Abbildung eines jeweiligen Teilgesichtsfeldes 30₁ - 30₄ eines Gesamtgesichtsfeldes 28 der Vorrichtung 10 auf einen jeweils zugeordneten Bildsensorbereich 12₁ - 12₄ eines Bildsensors 12. Die Bildsensorbereiche 12₁ - 12₄ können beispielsweise jeweils aus einem Chip gebildet sein, der ein entsprechendes Pixelarray umfasst, wobei die Chips wie in den Fig. 1a - 1c angedeutet, auf einem gemeinsamen Substrat bzw. einer gemeinsamen Platine 13 montiert sein können. Alternativ wäre es natürlich auch möglich, dass die Bildsensorbereiche 12₁ - 12₄ jeweils aus einem Teil eines gemeinsamen Pixelarrays, das sich kontinuierlich über die Bildsensorbereiche 12₁ - 12₄ erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 12₁ - 12₄ ausgelesen. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen montiert sein, wie z.B. alle gemeinsam oder gruppenweise oder dergleichen.

Bei dem Ausführungsbeispiel von Fig. 1a - 1c sind vier Kanäle einzeilig nebeneinander in Zeilenerstreckungsrichtung des Arrays 14 angeordnet, aber die Zahl vier ist lediglich exemplarisch und könnte auch jede andere Zahl größer Eins annehmen.

Optische Achsen 22₁ - 22₄ bzw. die Strahlengänge der optischen Kanäle 14₁ - 14₄ verlaufen zwischen den Bildsensorbereichen 12₁ - 12₄ und den Optiken 16₁ - 16₄ parallel zueinander. Dazu sind die Bildsensorbereiche 12₁ - 12₄ beispielsweise in einer gemeinsamen Ebene angeordnet und ebenso die optischen Zentren der Optiken 16₁ - 16₄. Beide Ebenen sind parallel zueinander, d.h. parallel zu der gemeinsamen Ebene der Bildsensorbereiche 12₁ - 12₄. Zudem fallen bei einer Projektion senkrecht auf die Ebene der Bildsensorbereiche 12₁ - 12₄ optische Zentren der Optiken 16₁ - 16₄ mit Zentren der Bildsensorbereiche 12₁ - 12₄ zusammen. In anderen Worten ausgedrückt sind in diesen parallelen Ebenen die Optiken 16₁ - 16₄ einerseits und die Bildsensorbereiche 12₁ - 12₄ mit gleichem Wiederholabstand in Zeilenerstreckungsrichtung angeordnet.

Ein bildseitiger Abstand zwischen Bildsensorbereichen 12₁ - 12₄ und den zugehörigen Optiken 16₁ - 16₄ ist so eingestellt, dass die Abbildungen auf die Bildsensorbereiche 12₁ - 12₄ auf einen gewünschten Objektabstand eingestellt sind. Der Abstand liegt beispielsweise in einem Bereich gleich oder größer der Brennweite der Optiken 16₁ - 16₄ oder zum Beispiel in einem Bereich zwischen einem Einfachen und einem Zweifachen der Brennweite der Optiken 16₁ - 16₄,beides inklusive. Der bildseitige Abstand entlang der optischen Achse 22₁ - 22₄ zwischen Bildsensorbereich 12₁ - 12₄ und Optik 16₁ - 16₄ kann auch einstellbar sein, wie z.B. manuell durch einen Benutzer oder automatisch über eine Autofokussteuerung.

Ohne zusätzliche Maßnahmen überlappten sich die Teilgesichtsfelder 30₁ - 30₄ der optischen Kanäle 14₁ - 14₄ im Wesentlichen vollständig aufgrund der Parallelität der Strahlengänge bzw. optischen Achsen 22₁ - 22₄. Zur Abdeckung eines größeren Gesamtgesichtsfeldes 28 und damit sich die Teilgesichtsfelder 30₁ - 30₄ lediglich räumlich teilweise überlappen, ist eine Strahlumlenkvorrichtung 24 vorgesehen. Die Strahlumlenkvorrichtung 24 lenkt die Strahlengänge bzw. optischen Achsen 22₁ - 22₄ mit einer kanalindividuellen Abweichung in eine Gesamtgesichtsfeldrichtung 33 um. Die Gesamtgesichtsfeldrichtung 33 verläuft beispielsweise parallel zu einer Ebene, die senkrecht zur Zeilenerstreckungsrichtung des Arrays 14 und parallel zu dem Verlauf der optischen Achsen 22₁ - 22₄ vor bzw. ohne Strahlumlenkung ist. Beispielsweise geht die Gesamtgesichtsfeldrichtung 33 aus den optischen Achsen 22₁ - 22₄ durch Drehung um die Zeilenerstreckungsrichtung um einen Winkel hervor, der > 0° und < 180° ist und beispielsweise zwischen 80 und 100° liegt und beispielsweise 90° betragen kann. Das Gesamtgesichtsfeld der Vorrichtung 10, das der Gesamtabdeckung der Teilgesichtsfelder 30₁ - 30₄ entspricht, liegt also nicht in Richtung einer Verlängerung der Hintereinanderschaltung des Bildsensors 12 und des Arrays 14 in Richtung der optischen Achsen 22₁ - 22₄, sondern durch die Strahlumlenkung befindet sich das Gesamtgesichtsfeld seitlich zu Bildsensor 12 und Array 14 in Richtung, in der die Bauhöhe der Vorrichtung 10 gemessen wird, d.h. die laterale Richtung senkrecht zur Zeilenerstreckungsrichtung. Zusätzlich aber lenkt die Strahlumlenkvorrichtung 24 jeden Strahlengang bzw. den Strahlengang jedes optischen Kanals 14₁ - 14₄ mit einer kanalindividuellen Abweichung von der soeben erwähnten zu der Richtung 33 führenden Umlenkung ab. Dazu umfasst die Strahlumlenkvorrichtung 24 für jeden Kanal 14₁ - 14₄ eine reflektierende Facette 26₁ - 26₄. Diese sind gegenseitig leicht geneigt. Die gegenseitige Verkippung der Facetten 26₁ - 26₄ ist derart gewählt, dass bei Strahlumlenkung durch die Strahlumlenkvorrichtung 24 die Teilgesichtsfelder 30₁ - 30₄ mit einer leichten Divergenz versehen werden, derart, dass sich die Teilgesichtsfelder 30₁ - 30₄ lediglich teilweise überlappen. Dabei kann, wie es exemplarisch in Fig. 1a angedeutet ist, die individuelle Umlenkung auch derart gestaltet sein, dass die Teilgesichtsfelder 30₁ - 30₄ das Gesamtgesichtsfeld 28 zweidimensional abdecken, d.h. im Gesamtgesichtsfeld 28 zweidimensional verteilt angeordnet sind.

Es sei darauf hingewiesen, dass viele der bisher beschriebenen Details zur Vorrichtung 10 lediglich exemplarisch gewählt wurden. Das betraf beispielsweise schon die zuvor erwähnte Anzahl von optischen Kanälen. Die Strahlumlenkvorrichtung 24 kann ebenfalls anders gebildet sein als dies bisher beschrieben wurde. Beispielsweise wirkt die Strahlumlenkvorrichtung 24 nicht notwendigerweise reflektiv. Sie kann also auch anders ausgeführt sein als in Form eines Facettenspiegels, wie z.B. in Form transparenter Prismenkeile. In diesem Fall könnte beispielsweise die mittlere Strahlumlenkung 0° betragen, d.h. die Richtung 33 könnte beispielsweise parallel zu den optischen Achsen 22₁ - 22₄ noch vor oder ohne Strahlumlenkung sein bzw. in anderen Worten ausgedrückt könnte die Vorrichtung 10 trotzt Strahlumlenkvorrichtung 24 weiterhin "geradeaus schauen". Die kanalindividuellen Umlenken durch die Strahlumlenkvorrichtung 24 würden wieder dazu führen, dass sich die Teilgesichtsfelder 30₁ - 30₄ lediglich geringfügig gegenseitig überlappen, wie z.B. paarweise mit einem Überlapp < 10 % bezogen auf die Raumwinkelbereiche der Teilgesichtsfelder 30₁ - 30₄.

Auch könnten die Strahlengänge bzw. optischen Achsen von der beschrieben Parallelität abweichen und dennoch könnte die Parallelität der Strahlengänge der optischen Kanäle aber immer noch so ausgeprägt sein, dass sich die Teilgesichtsfelder, die durch die einzelnen Kanäle 14₁ - 14_{N} abgedeckt bzw. auf die jeweiligen Bildsensorbereiche 12₁ - 12₄ abgebildet werden, ohne weitere Maßnahmen, wie nämlich die Strahlumlenkung, größtenteils überlappen würden, so dass, um ein größeres Gesamtgesichtsfeld durch die Multiaperturabbildungsvorrichtung 10 abzudecken, die Strahlumlenkvorrichtung 24 die Strahlengänge so mit einer zusätzlichen Divergenz versieht, dass sich die Teilgesichtsfelder der Kanäle 14₁ - 14_{N} weniger gegenseitig überlappen. Die Strahlumlenkvorrichtung 24 sorgt beispielsweise dafür, dass das Gesamtgesichtsfeld einen Öffnungswinkel aufweist, der größer ist als 1,5 mal dem Öffnungswinkel der einzelnen Teilgesichtsfelder der optischen Kanäle 14₁ - 14_{N}. Mit einer Art Vorab-Divergenz der optischen Achsen 22₁ - 22₄ wäre es auch möglich, dass sich beispielsweise nicht alle Facettenneigungen unterscheiden, sondern dass manche Gruppen von Kanälen beispielsweise die Facetten mit gleicher Neigung besitzen. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch lateralen Versatz zwischen optischen Zentren der Optiken und Bildsensorbereichen der Kanäle oder Prismenstrukturen oder dezentrierten Linsenausschnitten erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der anderen Transversalebene, d.h. sie sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden.

Unter Weglassung der Strahlumlenkvorrichtung oder Ausbildung der Strahlumlenkvorrichtung als planer Spiegel oder dergleichen könnte auch die gesamte Divergenz durch den lateralen Versatz zwischen optischen Zentren der Optiken einerseits und Zentren der Bildsensorbereiche andererseits oder durch Prismenstrukturen oder dezentrierte Linsenausschnitte bewerkstelligt werden.

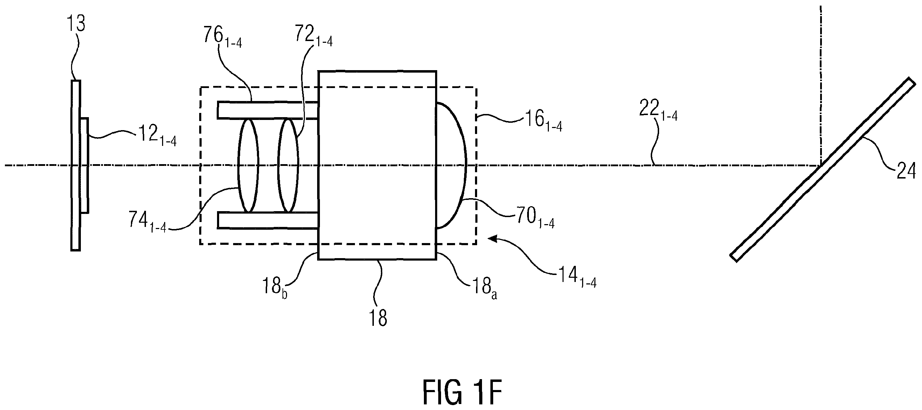

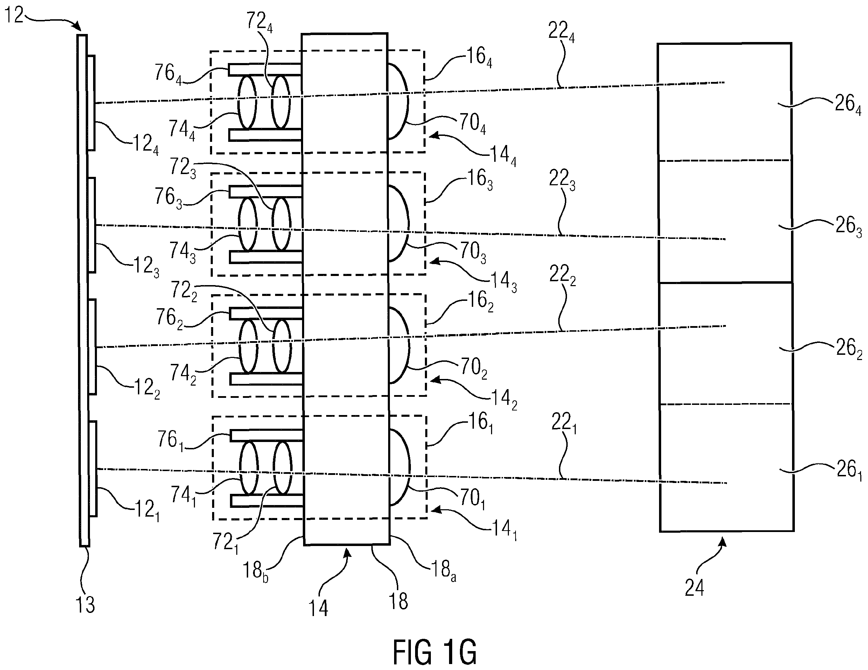

Die erwähnte möglicher Weise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angerordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angerordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz verwehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein rein In-Ebene-Versatz in Zeilenerstreckungsrichtung ändert die Bauhöhe nicht, aber er resultieren ggf. weniger Facetten und/oder die Facetten weisen nur eine Kippung in einer Winkelorientierung auf, was den Aufbau vereinfacht. Das ist in Fig. 1f und 1g veranschaulicht, bei denen die benachbarten Kanäle 14₁ und 14₂ einerseits und die benachbarten Kanäle 14₃ und 14₄ in der gemeinsamen Ebene verlaufende, jeweils gegeneinander schielende, also mit einer Vorab-Divergenz versehene, optische Achsen 14₁ und 14₂ bzw. 14₃ und 14₄ aufweisen. Die Facetten 26₁ und 26₂ können durch eine Facette gebildet werden und die Facetten 26₃ und 26₄ können durch eine andere Facette gebildet werden, wie es durch gestrichelte Linien zwischen den jeweiligen Paaren von Facetten gezeigt ist, und die einzigen zwei Facetten sind lediglich in einer Richtung geneigt und beide parallel zur Zeilenerstreckungsrichtung.

Ferner könnte es vorgesehen sein, dass manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafter Weise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecken, sondern lediglich zu Stereoskopiezwecken eine Ausführung, bei denen eine Gruppe von unmittelbar benachbarten Kanälen in Zeilenerstreckungsrichtung mit Ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken, und die Strahlengänge beider Kanalgruppen das Substrat 18 durchlaufen.

Die nachfolgende Erörterung beschäftigt sich mit den Optiken 16₁ - 16₄, deren Linsenebenen ebenfalls parallel zu der gemeinsamen Ebene der Bildsensorbereiche 12₁ - 12₄ liegt. Wie es nachfolgend beschrieben wird, sind Linsen der Optiken 16₁ - 16₄ der optischen Kanäle 14₁ - 14₄ an einer Hauptseite eines Substrats 18 über einen oder mehrere Linsenhalter befestigt und über das Substrat 18 mechanisch miteinander verbunden. Insbesondere verlaufen die Strahlengänge der Mehrzahl von optischen Kanälen 14₁ - 14₄ durch das Substrat 18. Das Substrat 18 ist also aus transparentem Material gebildet und ist plattenförmig oder besitzt beispielsweise die Form eines Parallelepipeds oder eines anderen konvexen Körpers mit einer planaren Hauptseite 18ₐ und einer gegenüberliegenden, dazu ebenfalls planaren Hauptseite 18_{b}. Die Hauptseiten sind vorzugsweise senkrecht zu den optischen Achsen 22₁ - 22₄ positioniert. Wie nachfolgend beschrieben, kann es gemäß Ausführungsbeispielen Abweichungen von der reinen Parallelepipedform geben, die auf eine mit dem Substrat einstückige Ausformung von Linsen der Optiken zurückzuführen sind.

Bei dem Ausführungsbeispiel 1a - 1c handelt es sich bei dem flachen Trägersubstrat 18 beispielsweise um ein Substrat aus Glas oder Polymer. Das Material des Substrats 18 kann nach Gesichtspunkten hoher optischer Transparenz und niedrigem Temperaturkoeffizienten oder weiteren mechanischen Eigenschaften wie Härte, Elastizitäts- oder Torsionsmodul ausgewählt sein.

Das Substrat kann als einfaches planes Teil des Strahlenganges ausgebildet sein, ohne dass irgendwelche zusätzlichen Linsen direkt hierauf untergebracht sind. Zusätzlich können Blenden, wie z.B. Apertur- oder Falschlichtblenden, oder/und Filterschichten, wie z.B. IR-Blockfilter auf den Substratoberflächen angebracht sein oder aus mehreren Lagen verschiedener Substrate bestehen, auf deren Oberflächen Blenden und Filterschichten angebracht sein können, die sich wiederum kanalweise z.B. in ihrem spektralen Absorption unterscheiden können..

Das Substrat kann aus Material bestehen, dass in unterschiedlichen Bereichen des elektromagnetischen Spektrum, welches vom Bildsensor detektiert werden kann, unterschiedliche Eigenschaften aufweist, insbesondere eine nicht-konstante Absorption.

Bei dem Ausführungsbeispiel von Fig. 1a - 1c umfasst jede Optik 16₁ - 16₄ drei Linsen. Die Anzahl der Linsen ist allerdings frei wählbar. Die Anzahl könnte 1, 2 oder jede andere beliebige Anzahl sein. Die Linsen können konvex, lediglich eine optisch abbildende Funktionsfläche wie z.B. eine sphärische, eine asphärische, eine Freiformfläche aufweisen, oder zwei, wie z.B. zwei einander gegenüberliegende, um beispielsweise eine konvexe oder eine konkave Linsenform zu ergeben. Auch mehrere optisch wirksame Linsenflächen sind möglich, wie z.B. durch Aufbau einer Linse aus mehreren Materialien.

Eine erste Linse 70₁ - 70₄ jeder Optik 16₁ - 16₄ ist bei dem Ausführungsbeispiel von Fig. 1a - 1c an der Hauptseite 18ₐ gebildet. Die Linsen 70₁ - 70₄ sind beispielsweise durch Abformung auf der Hauptseite 18ₐ des Substrats 18 hergestellt worden und bestehen beispielsweise aus Polymer, wie z.B. aus UV-aushärtbarem Polymer. Die Abformung geschieht beispielsweise durch ein Abformwerkzeug und die Aushärtung kann beispielsweise über Temperatur und/oder über UV-Bestrahlung geschehen.

Bei dem Ausführungsbeispiel von Fig. 1a - 1c besitzt jede Optik 16₁ - 16₄ noch eine weitere zweite und dritte Linse 72₁ - 72₄ bzw. 74₁ - 74₄. Diese Linsen sind exemplarisch über axial verlaufende röhrenförmige Linsenhalter 76₁ - 76₄ gegenseitig im Inneren des jeweiligen Linsenhalters fixiert und über Letzteren an der Hauptseite 18_{b} fixiert, wie z.B. mittels Klebens oder einer anderen Fügetechnik. Die Öffnungen 75₁ - 75₄ der Linsenhalter 76₁ - 76₄ sind beispielsweise mit kreisförmigem Querschnitt versehen, in dessen zylindrischen Innenseite die Linsen 72₁ - 72₄ bzw. 74₁ - 74₄ befestigt sind. Für jede Optik 16₁ - 16₄ liegen also die Linsen koaxial auf der jeweiligen optischen Achse 22₁ - 22₄. Die Linsenhalter 76₁ - 76₄ können aber auch einen sich über ihre Länge bzw. entlang der jeweiligen optischen Achsen ändernden Querschnitt aufweisen. Hierbei kann der Querschnitt mit geringer werdendem Abstand zum Bildsensor 12 zunehmend rechteckigen oder quadratischen Charakter aufweisen. Der äußere Form der Linsenhalter kann sich somit auch von der Form der Öffnungen unterscheiden. Das Material der Linsenhalter kann lichtabsorbierend sein.

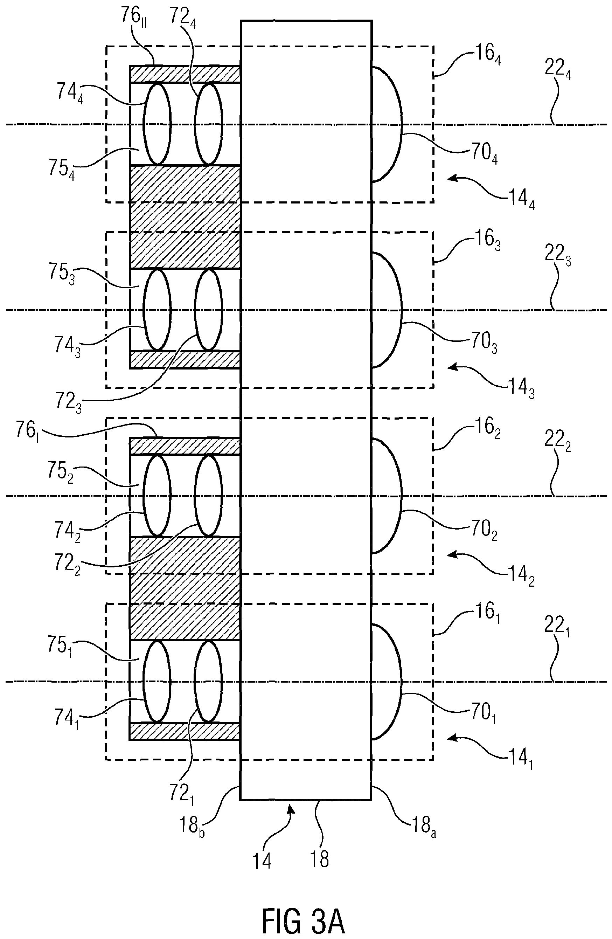

Auch wenn die Linsenhalter 76₁ - 76₄ als separate Teile für jeden Kanal der Multiaperturvorrichtung beschrieben wurden, können diese auch als ein zusammenhängender Körper ausgeführt sein, d.h. einen Körper, der Linsen aller optischer Kanäle trägt. Alternativ wäre es möglich, dass sich die Kanäle gruppenweise einen solchen Linsenhalter teilen, d.h. mehrere Linsenhalter vorhanden sind, jeder für Linsen einer anderen Gruppe von Kanälen. Letzterer Fall ist in Fig. 3a dargestellt. Ein Linsenhalter 76₁ hat Öffnungen 75₁ - 75₂ für die Linsen 72₁,72₂, 74₁,74₂ der Optiken 14₁ und 14₂ und ein Linsenhalter 76_{II} hat Öffnungen 753 - 754 für die Linsen 72₃,72₄ 74₃,74₄ der Optiken 14₃ und 14₄.

Die Befestigung über die vorerwähnten Linsenhalter geschieht beispielsweise so, dass wie in den Figuren 1a bis 3a dargestellt, Linsenscheitel der durch dieselben gehalterten Linsen von dem Substrat 18 beabstandet sind.

Wie es im Vorhergehenden bereits erwähnt wurde, ist es möglich, dass das Substrat 18 beidseitig planar ist und mithin keine Brechkraftwirkung aufweist. Allerdings wäre es auch möglich, dass das Substrat 18 mechanische Strukturen aufweist, wie z.B. Vertiefungen oder Vorsprünge, die eine leichte, form- und/oder kraftschlüssige Ausrichtung anschließender Bauteile ermöglichen, wie z.B. das Anschließen von Einzellinsen oder Gehäuseteilen. Bei dem Ausführungsbeispiel von Fig. 1a - 1c beispielsweise könnte das Substrat 18 an der Hauptseite 18_{b} befestigungserleichternde oder die Ausrichtung erleichternde Strukturen an den Positionen aufweisen, an welchen das jeweilige Ende der Röhre des Linsenhalters 76₁ - 76₄ der jeweiligen Optik 16₁ - 16₄ befestigt ist. Bei diesen Strukturen kann es sich beispielsweise um eine kreisförmige Vertiefung handeln oder einer Vertiefung mit einer anderen Form, die der Form einer dem Substrat zugewandten Seite des jeweiligen Linsenhalters entspricht, in die die Seite der jeweiligen Linsenhalters 76₁ - 76₄ Eingriff nehmen kann. Es sei noch einmal hervorgehoben, dass auch andere Öffnungsquerschnitte und damit korrespondierend eventuell andere Linsenaperturen als kreisförmige möglich sind.

Das Ausführungsbeispiel von Fig. 1a - 1c löst sich also von einem klassischen Aufbau von Kameramodulen, die Einzellinsen aufweisen und zur Halterung der Einzellinsen einen diese komplett umschließenden, nicht transparenten Gehäuseträger aufweisen. Vielmehr verwendet obiges Ausführungsbeispiel einen transparenten Körper 18 als Substratträger.

Dieser erstreckt sich über mehrere benachbarte Kanäle 14₁ - 14₄, um von deren Abbildungsstrahlengang durchdrungen zu werden. Er stört die Abbildung nicht, aber er erhöht auch nicht die Bauhöhe.

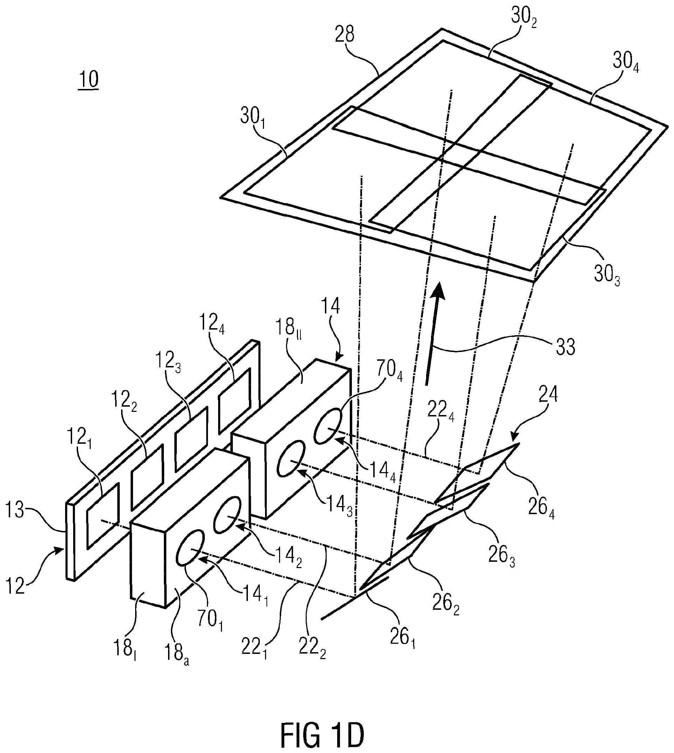

Es wird allerdings auf verschiedene Möglichkeiten hingewiesen, wie das Ausführungsbeispiel von Fig. 1a - 1c variiert werden könnte. Beispielsweise erstreckt sich das Substrat 18 nicht notwendigerweise über alle Kanäle 14₁ - 14₄ der Multiaperturabbildungsvorrichtung 10. Es wäre möglich, dass sich das Substrat 18 lediglich gruppenweise, wie z.B. paarweise über benachbarte Kanäle 14₁ - 14₄ erstreckt, d.h. mehrere Träger 18_{I} und 18_{II} vorhanden sind, wie es in Fig. 1d veranschaulicht ist. So könnten beispielsweise bei dem Ausführungsbeispiel von Fig. 1a - 1c die Kanäle 14₁ - 14₂ durch einen ersten Träger 18_{I} verlaufen, der die Optiken 16₁ - 16₂ trägt, während die Kanäle 14₃ und 14₄ bzw. deren Strahlengänge einen weiteren Träger 18_{II} durchdringen, der die Optiken 16₃ und 16₄ trägt.

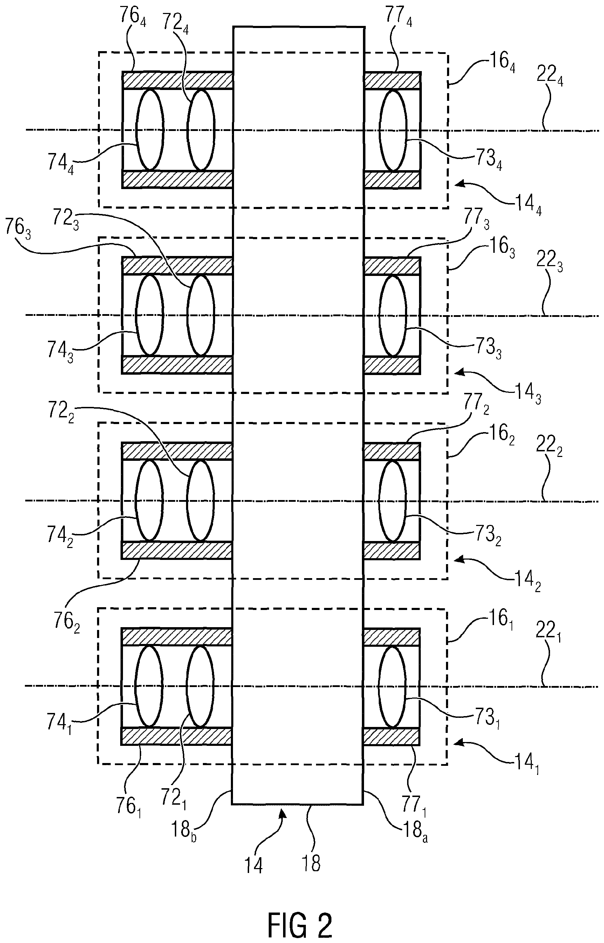

Anders als im Vorhergehenden beschrieben, wäre es möglich, dass jede Optik 16₁ - 16₄ lediglich über Linsenträger gehalterte Linsen auf beiden Seiten 18ₐ und 18_{b} aufweist. Diese Möglichkeit ist exemplarisch in Fig. 2 dargestellt.

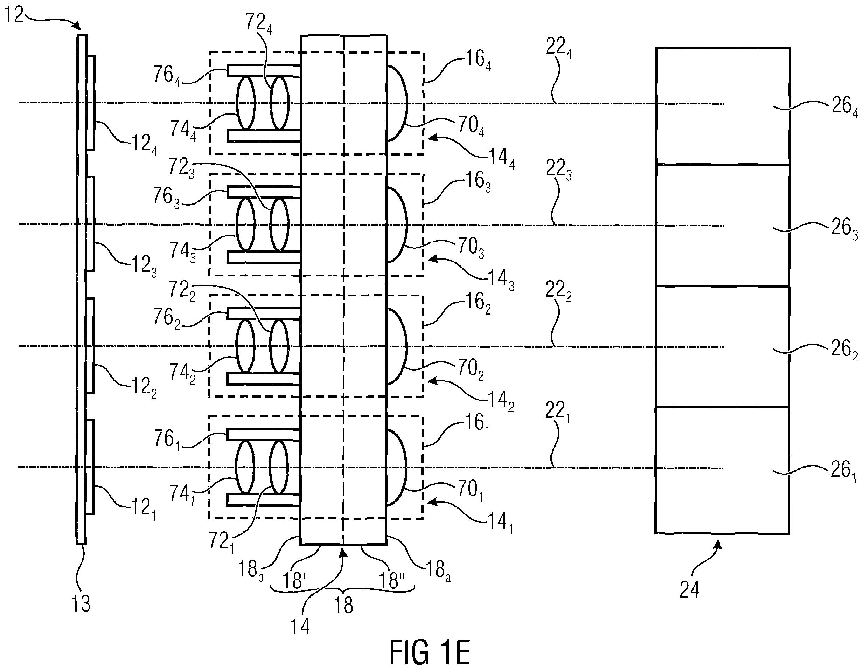

Möglich wäre es auch, dass das Substrat 18 aus zwei Substraten 18' und 18" besteht, deren Vorderseiten die Hauptseiten 18_{b} bzw. 18ₐ bilden, auf denen die Linsen abgeformt oder befestigt sind, während ihre Rückseiten aneinandergefügt sind, wobei beliebige Fügetechniken verwendet werden können, die die Transparenz bzw. die Durchlässigkeit für den Strahlengang des jeweiligen optischen Kanals erhalten. Dies ist in Fig. 1e exemplarisch für den Fall von Fig. 1a-1c dargestellt.

Auch die Existenz lediglich der Linsen 72₁ - 74₄ auf der Hauptseite 18_{b}, d.h. ohne die Linsen 70₁ - 70₄ auf der anderen Seite 18ₐ, wäre denkbar, ebenso wie das Vorsehen der Linsen gemäß 72₁ - 74₄ auf der anderen Seite 18_{a,} d.h. der dem Bildsensor 12 abgewandten Seite des Substrats 18 und nicht der davon zugewandten Seite, d.h. 18ₐ. Ebenso ist die Anzahl an Linsen in einem Linsenträger 76₁ - 76₄ frei wählbar. So könnte auch lediglich eine Linse oder es könnten mehr als zwei in einem solchen Träger 76₁ - 76₄ vorhanden sein. Wie in Fig. 2 gezeigt, könnte es sein, dass auf beiden Seiten 18ₐ und 18_{b} Linsen über jeweilige Linsenträger 76₁ - 76₄ bzw. 77₁ - 77₄ an der jeweiligen Seite 18ₐ bzw. 18_{b} montiert sind. In Fig. 2 sind beispielsweise gegenüber Fig. 1a-c die Linsen 72₁ - 74₄ durch Linsen 73₁ - 73₄, die durch Linsenträger 77₁ - 77₄ an der Hauptseite 18ₐ montiert sind, ersetzt.

Ebenso wäre es möglich, dass keine abgeformte Linse gemäß 70₁ - 70₄ auf der Hauptseite 18ₐ vorhanden ist, sondern lediglich die über den jeweiligen Linsenträger an der Seite 18_{b} montierten Linsen, wobei wiederum gilt, dass das Gleiche auch für die andere Seite 18ₐ gelten könnte.

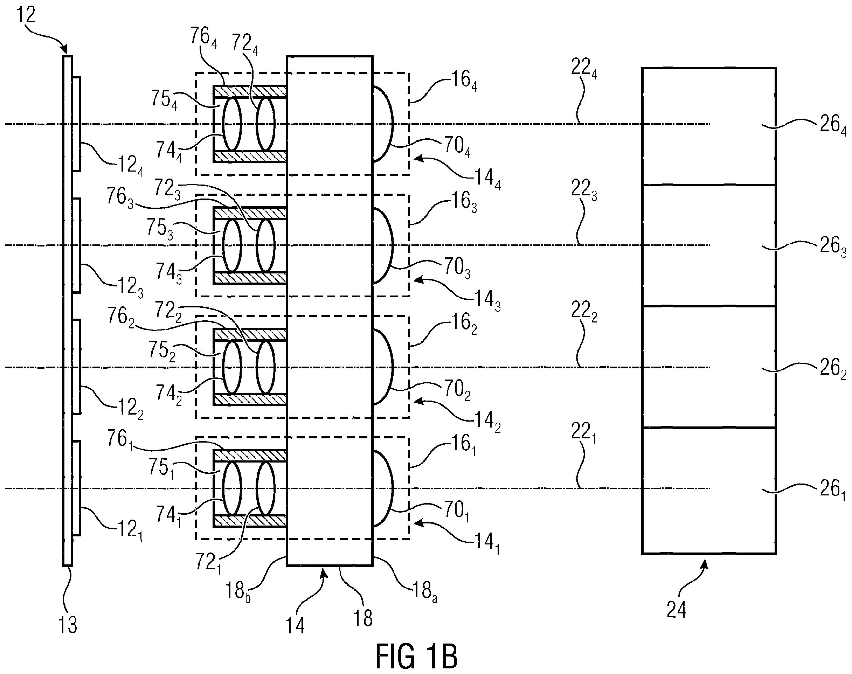

Abweichend von den vorhergehenden Ausführungsbeispielen könnte der Körper des Trägers 18 auch von der rein planaren Form der Seiten 18ₐ und 18_{b} abweichend auch mit Brechkraftwirkung versehen sein. In anderen Worten ausgedrückt, könnten Linsen gemäß 70₁ - 70₄ einstückig mit dem Träger 18 gebildet sein, beispielsweise mittels Spritzgussgießens oder Glasprägens oder dergleichen. Das soll durch die Strichelung der Schnittstelle zwischen Linsen 70₁ - 70₄ und Träger 18 in Fig. 1a und 1b angedeutet sein. An dieser Schnittstelle zwischen Linsen und Substratträger könnten auch Blenden, wie z.B. Apertur- oder Falschlichtblenden, oder/und Filterschichten, wie z.B. IR-Blockfilter, vorgesehen sein. Zusätzlich oder alternativ können Blenden, wie z.B. Apertur- oder Falschlichtblenden, oder/und Filterschichten, wie z.B. IR-Blockfilter, an der Hauptseite vorgesehen sein, an der Linsen der Optiken über Linsenhalter montiert sind, nämlich an den Stellen, an denen die Strahlengänge das Substrat 18 durchdringen. In dem Fall einer Hauptseite des Substrats, die weder über Linsenhalter noch anderweitig eine Linse der Optiken aufweist, können solche Blenden oder Schichten an den Stellen, die von den Strahlengängen durchdrungen werden, natürlich ebenfalls vorhanden sein.

Wie schon geäußert ist die Herstellung eines Trägers mit den vorgewölbten Linsen 70₁ - 70₄ an der Hauptseite 18ₐ mittels Glasprägens, Polymerprägens oder mittels Polymer- oder Glasspritzguss möglich.

Es wäre denkbar, dass abgeformte Linsen 70₁ - 70₄ achszentral zu über Linsenhalter gehalterten Linsen auf der gleichen Hauptseite angeordnet sind, das also die Linsenhalter auf die entsprechende Hauptseite montiert sind, wie z.B. vermittels Klebens, und dass die von denselben gehalterten Linsen weitere Linsen gegenüberliegen, die in der gleichen Hauptseite aus dem Substratmaterial herausgeformt oder auf die gleiche Hauptseite abgeformt sind.

Wurden in den vorherigen Ausführungsbeispielen Anordnungen mit nur einem Trägersubstrat beschrieben, so können weiterhin auch mehrere Trägersubstrate im Aufbau eingeordnet sein.

Auf die im Vorhergehenden beschriebene Art und Weise ist es also möglich, ein einzeiliges Array von optischen Kanälen mit Optiken zu schaffen, deren optisch funktionale Linsenflächen für alle Kanäle identisch sind. Es wäre aber ebenfalls möglich, die Linsen für jeden Kanal mit einer individuellen Abweichung gegenüber den Linsen der anderen optischen Kanäle zu versehen, wie z.B. zum Zweck des Ausgleichs von Abbildungsabweichungen unter den Kanälen aufgrund der kanalindividuellen Strahlumlenkung, wie durch die Strahlumlenkvorrichtung 24. Ferner könnten die Kanäle durch Verwendung unterschiedlichen Materials für die Linsen der jeweiligen optischen Kanäle für unterschiedliche Spektralbereiche empfindlich gemacht werden bzw. hinsichtlich ihrer spektralen Transparenz variiert werden. Jeder Kanal hätte dann beispielsweise eine unterschiedliche spektrale Filterwirkung. Beispielsweise wäre es möglich, dass Gruppen von Kanälen ein gemeinsames Teilgesichtsfeld bzw. ein sich vollständig überlappendes Teilgesichtsfeld auf den jeweiligen Bildsensorbereich abbilden.

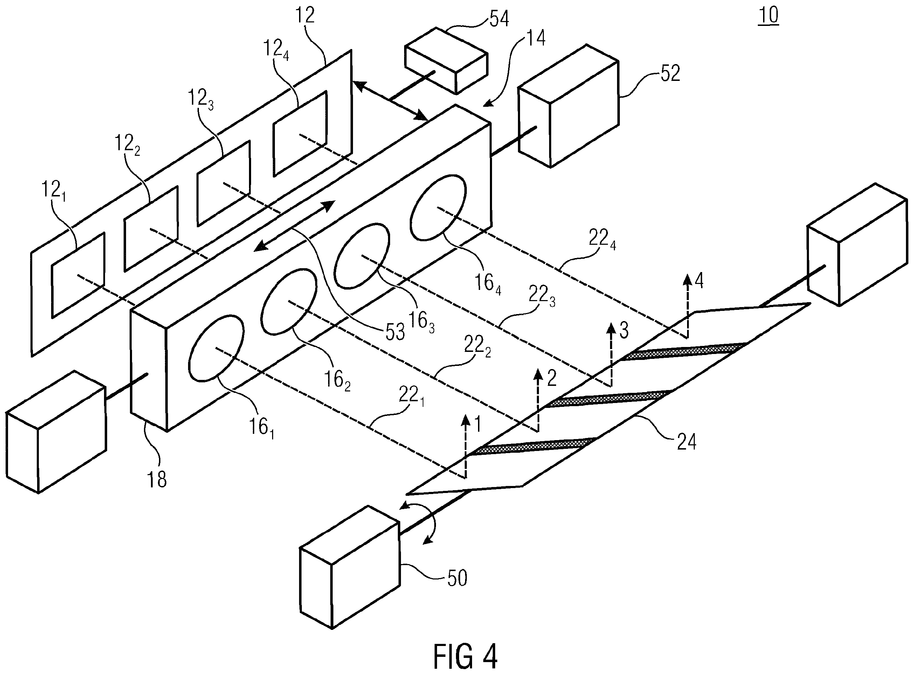

Fig. 4 zeigt noch exemplarisch, dass die Multiaperturabbildungsvorrichtung 10 von Fig. 1a - 1c um eines oder mehrere der nachfolgend beschriebenen zusätzlichen Einrichtungen ergänzt werden könnte.

Beispielsweise zeigt Fig. 4, dass eine Einrichtung 50 vorhanden sein könnte, um die Strahlumlenkvorrichtung 24 um eine Achse zu drehen, die parallel zu der Zeilenerstreckungsrichtung des Arrays 14 ist. Die Drehachse liegt beispielsweise in der Ebene der optischen Achsen 22₁ - 22₄ oder davon weniger als ein Viertel eines Durchmessers der Optiken 16₁ - 16₄ entfernt. Alternativ wäre es natürlich auch möglich, dass die Drehachse weiter entfernt liegt, wie z.B. weniger als ein Optikdurchmesser oder weniger als vier Optikdurchmesser. Die Einrichtung 50 kann beispielsweise vorgesehen sein, um die Strahlumlenkvorrichtung 24 mit kurzer Ansprechzeit in einem lediglich kleinen Winkelbereich, wie z.B. innerhalb einer Spanne von weniger als 10° oder weniger als 20° zu drehen, um Verwacklungen der Multiaperturabbildungsvorrichtung 10 durch beispielsweise einen Benutzer während einer Aufnahme auszugleichen. Die Einrichtung 50 würde in diesem Fall beispielsweise von einer Bildstabilisierungssteuerung angesteuert werden.

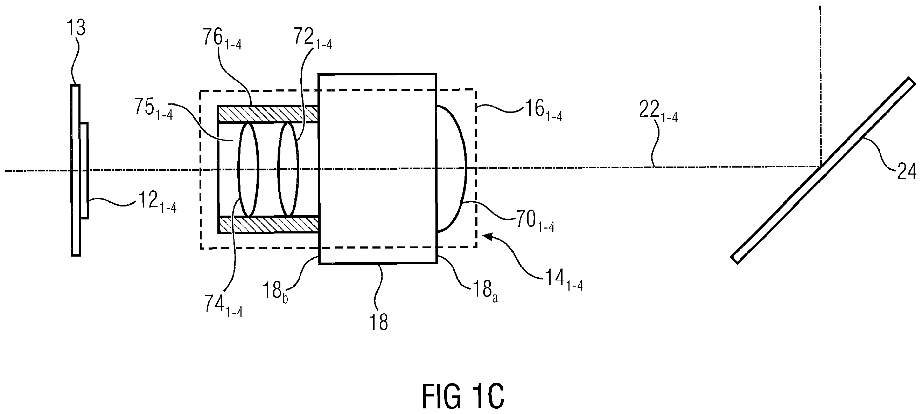

Alternativ oder zusätzlich könnte die Einrichtung 50 ausgebildet sein, um mit größeren Winkelverstellungen das Gesamtgesichtsfeld, das durch die Gesamtabdeckung der Teilgesichtsfelder 30₁ - 30₄ (Fig. 1) definiert wird, in seiner Richtung zu verändern. Dabei wäre es ferner möglich, dass durch Rotation der Strahlumlenkvorrichtung 24 auch Ablenkungen erzielt werden, bei denen das Gesamtgesichtsfeld in der entgegengesetzten Richtung relativ zu der Vorrichtung 10 angeordnet ist, indem beispielsweise die Strahlumlenkvorrichtung 24 als ein beidseitig reflektives Spiegelarray ausgebildet ist.

Wiederum alternativ oder zusätzlich kann die Vorrichtung 10 eine Einrichtung 52 aufweisen, um die Optiken 16₁ - 16₄ vermittels des Substrats 18 bzw. das Substrat 18 selbst und damit die Optiken 16₁ - 16₄ translatorisch entlang der Zeilenerstreckungsrichtung zu bewegen. Die Einrichtung 52 könnte beispielsweise ebenfalls durch die vorerwähnte Bildstabilisierungssteuerung angesteuert werden, um durch die Bewegung 53 entlang der Zeilenerstreckungsrichtung eine Bildstabilisierung quer zu der Bildstabilisierung zu erzielen, die durch die Rotation der Spiegelumlenkvorrichtung 24 verwirklicht wird.

Weiterhin kann zusätzlich oder alternativ die Vorrichtung 10 eine Einrichtung 54 zum Verändern des bildseitigen Abstands zwischen Bildsensor 12 und Optiken 16₁ - 16₄ bzw. zwischen Bildsensor 12 und Körper 18 aufweisen, um eine Schärfentiefeneinstellung zu erzielen. Die Einrichtung 54 kann durch eine manuelle Benutzersteuerung oder durch eine Autofokussteuerung der Vorrichtung 10 gesteuert werden.

Die Einrichtung 52 dient also als Aufhängung des Substrats 18 und ist vorzugsweise, wie in Fig. 4 angedeutet seitlich neben dem Substrat 18 entlang der Zeilenerstreckungsrichtung angeordnet, um die Bauhöhe nicht zu erhöhen. Auch für die Einrichtungen 50 und 54 gilt, dass selbige vorzugsweise in der Ebene der optischen Strahlengänge angeordnet sind, um die Bauhöhe nicht zu erhöhen.

Es sei darauf hingewiesen, dass die Optiken 16₁ - 16₄ nicht nur untereinander, wie z.B. über das schon erwähnte transparente Substrat, sondern auch relativ zu der Strahlumlenkvorrichtung in konstanter relativer Lage gehaltert sind, wie z.B. über einen geeigneten Rahmen, der vorzugsweise die Bauhöhe nicht vergrößert und deshalb vorzugsweise in der Ebene der Komponenten 12, 14 und 24 bzw. in der Ebene der Strahlengänge verläuft. Die Konstanz der relativen Lage könnte sich auf den Abstand zwischen Optiken und Strahlumlenkvorrichtung entlang der optischen Achsen beschränken, so dass die Einrichtung 54 beispielsweise die Optiken 16₁ - 16₄ zusammen mit der Strahlumlenkvorrichtung translatorisch entlang der optischen Achsen bewegt. Der Optiken-zu-Strahlumlenkvorrichtung-Abstand könnte auf einen minimalen Abstand eingestellt werden, so dass der Strahlengang der Kanäle nicht durch die Segmente der Strahlumlenkvorrichtung 24 lateral eingeschränkt wird, was die Bauhöhe verringert, da andernfalls die Segmente 26ᵢ hinsichtlich der lateralen Ausdehnung für den größten Optiken-zu-Strahlumlenkvorrichtung-Abstand dimensioniert sein müssten, um den Strahlengang nicht einzuschneiden. Zusätzlich könnte die Konstanz der relativen Lage könnte vorerwähnter Rahmen die Optiken und die Strahlumlenkvorrichtung entlang der x-Achse starr zueinander haltern, sodass die Einrichtung 52 die Optiken 16₁ - 16₄ zusammen mit der Strahlumlenkvorrichtung translatorisch entlang der Zeilenerstreckungsrichtung bewegen würde.

Die oben beschriebene Strahlumlenkvorrichtung 24 zum Umlenken des Strahlengangs der optischen Kanäle ermöglicht zusammen mit dem Aktor 50 zur Erzeugung der Rotationsbewegung der Strahlumlenkvorrichtung 24 einer optischen Bildstabilisierungssteuerung der Multiaperturabbildungsvorrichtung 10 eine Bild- bzw. Gesamtblickfeldstabilisierung in zwei Dimensionen, nämlich durch die translatorische Bewegung des Substrats 18 eine Bildstabilisierung entlang einer ersten Bildachse, die im Wesentlichen parallel zur Zeilenerstreckungsrichtung verläuft, und durch die Erzeugung der Rotationsbewegung der Strahlumlenkvorrichtung 24 eine Bildstabilisierung entlang einer zweiten Bildachse, die im Wesentlichen parallel zu den optischen Achsen vor bzw. ohne Strahlumlenkung verläuft, oder - betrachtet man die umgelenkten optischen Achsen - senkrecht zu den optischen Achsen und der Zeilenerstreckungsrichtung. Zusätzlich kann die beschriebene Anordnung eine translatorische Bewegung der im angesprochenen Rahmen fixierten Strahlumlenkvorrichtung und des Arrays 14 senkrecht zur Zeilenerstreckungsrichtung bewirken, wie z.B. durch den beschriebenen Aktor 54, die für die Realisierung einer Fokuseinstellung und damit einer Autofokusfunktion genutzt werden kann.

Es sei zu den obigen Ausführungen der Vollständigkeit halber noch darauf hingewiesen, dass die Vorrichtung bei einer Aufnahme über die Bildsensorbereiche ein Bild einer Szene pro Kanal aufnimmt, die durch die Kanäle auf die Bildsensorbereiche abgebildet worden, sind, und dass die Vorrichtung optional über einen Prozessor verfügen kann, der die Bilder zu einem Gesamtbild zusammenfügt oder verschmelzt, das der Szene in dem Gesamtgesichtsfeld entspricht, und/oder zusätzliche Daten bereitstellt, wie zum Beispiel 3D-Bilddaten und Tiefeninformationen der Objektszene zur Erstellung von Tiefenkarten und zur softwaretechnischen Realisierung wie z.B. von Refocusing (Festlegung der Bildschärfebereiche nach der eigentlichen Aufnahme), All-in-Focus-Bildern, Virtual Green Screen (Trennung von Vorder- und Hintergrund) u.a.. Letztere Aufgaben könnten ebenfalls von jenem Prozessor erledigt werden oder extern. Der Prozessor könnte allerdings auch eine zu der Multiaperturvorrichtung externe Komponente darstellen..

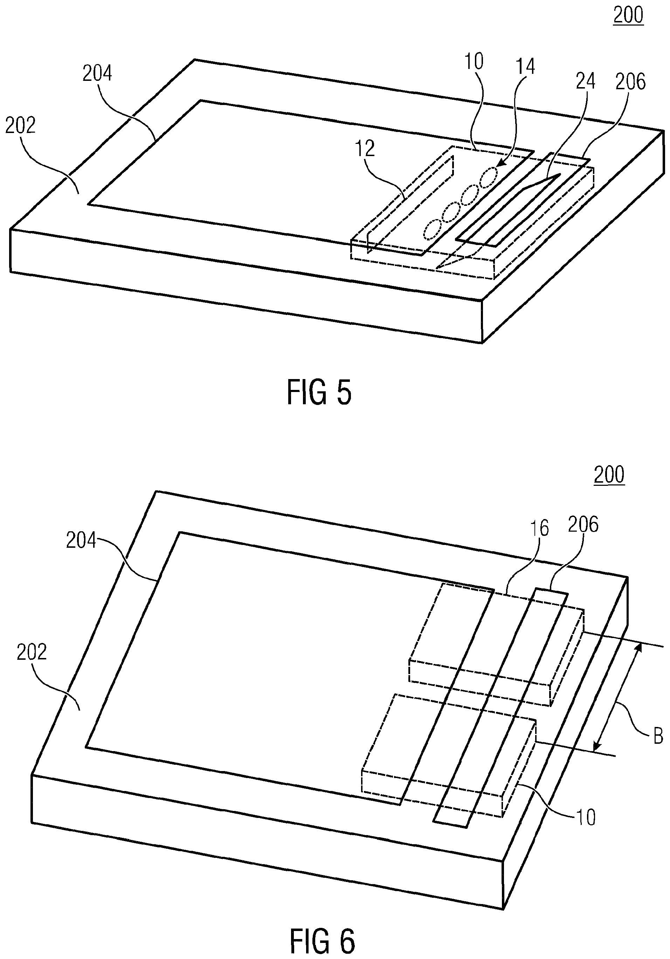

Fig. 5 illustriert, dass Vorrichtungen 10 der vorher beschrieben Alternativen beispielsweise in einem flachen Gehäuse eines tragbaren Geräts 200 eingebaut sein können, wie zum Beispiel eines Mobiltelefons, ein Smartphone oder Mediaplayers oder dergleichen, wobei dann beispielsweise die Ebenen des Bildsensors 12 bzw. der Bildsensorbereiche und die Linsenebenen der Optiken der Kanäle 14 senkrecht zu der flachen Erstreckungsrichtung des flachen Gehäuses bzw. parallel zur Dickenrichtung ausgerichtet sind. Auf diese Weise würde beispielsweise die Strahlumlenkvorrichtung 24 dafür sorgen, dass das Gesamtgesichtsfeld der Multiaperturabbildungsvorrichtung 10 vor einer Vorderseite 202 des flachen Gehäuses liegt, das beispielsweise auch einen Bildschirm aufweist. Alternativ wäre auch eine Umlenkung derart möglich, dass sich das Gesichtsfeld vor einer Rückseite des flachen Gehäuses, die der Vorderseite 202 gegenüberliegt, befindet. Das Gehäuse könnte ein transparentes Fenster 206 in der durchdrungenen Seite 202 aufweisen, um die Strahlengänge der optischen Kanäle 14 durchzulassen. Es können weiterhin schaltbare Blenden (mechanisch bewegt, elektrochrom) angebracht sein, um den Lichteintritt durch die Öffnung des Fensters auf der Vorder- und/oder der Rückseite zu beeinflussen. Das Gehäuse des Geräts 200 bzw. das Gerät selbst kann flach sein, da durch die illustrierte Lage der Vorrichtung 10 in dem Gehäuse, die Bauhöhe der Vorrichtung 10, die zur Dicke des Gehäuses parallel ist, gering gehalten werden kann. Eine Umschaltbarkeit könnte ebenfalls vorgesehen werden, indem ein Fenster auf der der Seite 202 gegenüberliegenden Seite vorgesehen wird und beispielsweise die Strahlumlenkvorrichtung zwischen zwei Stellungen bewegt wird, indem letztere beispielsweise als Vor- und rückseitig spiegelnder Spiegel ausgeführt wird und von der einen in die andere Stellung gedreht wird, oder als Facettenspiegel mit einem Satz von Facetten für die eine Stellung und einem anderen Satz von Facetten für die andere Stellung, wobei die Facettensätze in Zeilenerstreckungsrichtung nebeneinander liegen und durch translatorische Hin- und Her-Bewegung der Strahlumlenkvorrichtung entlang der Zeilenerstreckungsrichtung zwischen den Stellungen umgeschaltet wird. Ein Verbau der Vorrichtung 10 in ein anderes ggf. nicht tragbares Gerät, wie z.B. eine Auto, wäre natürlich ebenfalls möglich. Fig. 6 zeigt noch, dass mehrere Module 10, deren Teilgesichtsfelder ihrer Kanäle das gleiche Gesichtsfeld vollständig und optional sogar in kongruenter Weise abdecken, beispielsweise mit einem Basisabstand B zueinander entlang einer für beide Module gleichen Zeilenerstreckungsrichtung in dem Gerät 200 verbaut sein können, wie zum Beispiel zum Zweck der Stereoskopie. Mehr als zwei Module wären ebenfalls denkbar. Die Zeilenerstreckungsrichtungen der Module 10 könnten auch nicht kollinear, sondern lediglich parallel zueinander sein. Es sei jedoch noch einmal erwähnt, dass, wie im vorgehenden erwähnt, auch eine Vorrichtung 10 bzw. ein Modul mit Kanälen so ausgestattet sein könnte, dass dieselben gruppenweise dasselbe Gesamtgesichtsfeld jeweils vollständig abdecken.

Es sei noch erwähnt, das die Strahlumlenkvorrichtung bei alternativen Ausführungsbeispielen verglichen zu den oben beschrieben Ausführungsbespielen auch fehlen könnte. Wenn eine lediglich teilweise gegenseitige Überlappung der Teilgesichtsfelder gewünscht ist, dann könnte dies zum Beispiel über gegenseitige laterale Versätze zwischen dem Zentrum des Bildsensorbereichs und des optischen Zentrums der Optik des entsprechenden Kanals erzielt werden. Die Aktoren gemäß Fig. 4 könnten natürlich dennoch Anwendung finden, wobei im Ersatz für die Einrichtung 50 beispielsweise der Aktor 52 zusätzlich zu einer translatorischen Bewegung der Optiken bzw. des Trägers 18 in der Lage ist.

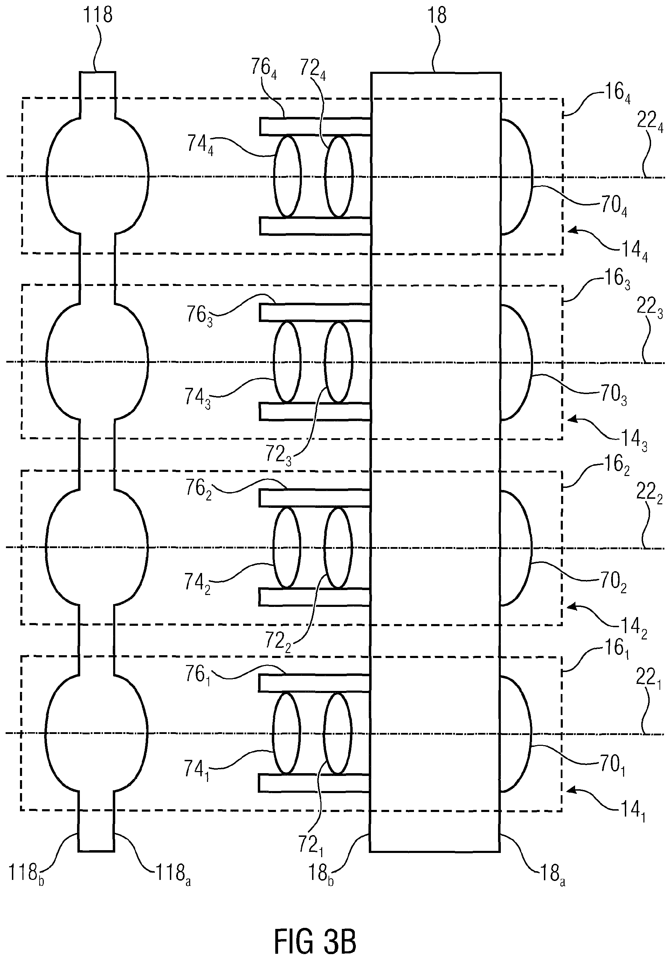

Noch einmal in anderen Worten ausgeführt zeigen obige Ausführungsbeispiele also eine Multiaperturabbildungsvorrichtung mit einzeiligem Array von nebeneinander angeordneten optischen Kanälen, bei der sich irgendwo im Strahlengang der Multiaperturabbildungsvorrichtung ein sich über die Kanäle erstreckendes Substrat aus beispielsweise Glas oder Polymer zur Verbesserung der Stabilität erstreckt. Das Substrat kann zusätzlich bereits auf Vorder- und/oder Rückseite Linsen beinhalten. Die Linsen können aus dem Material des Substrats bestehen (wie z.B. durch Heizprägen entstanden) oder darauf abgeformt sein. Vor und hinter dem Substrat können sich weitere Linsen befinden, die sich nicht auf Substraten befinden und einzeln montiert werden. Es können mehrere Substrate in einem Aufbau, sowohl entlang, wie in Fig. 1d dargestellt, als auch senkrecht zur Zeilenerstreckungsrichtung, wie in Fig. 1e dargestellt, vorhanden sein. Gegenüber der Variante nach Fig. 1e wäre es dabei wie in Fig. 3b gezeigt auch möglich, mehrere Substrate mit Linsen entlang der Strahlengänge hintereinanderzuschalten, d.h. sie anderweitig hintereinander in einer vorbestimmten Lagebeziehung zueinander zu halten, wie z.B. über einen Rahmen, ohne dass ein Aneinanderfügen gemäß Fig. 1e notwendig wäre. Auf diese Weise stünden für das Vorsehen bzw. Befestigen von Linsen Zwei mal so viele Hauptseiten zur Verfügung, wie Trägersubstrate verwendet werden, nämlich in dem Beispiel von Fig. 3b ein Substrat 18, das gemäß obiger Beispiele mit Linsen bestückt sein kann, hier exemplarisch gemäß Fig. 1b, und ein Substrat, das ebenfalls gemäß obiger Beispiele mit Linsen bestückt sein kann, also unter anderem mit Linsen, die über Linsenhalter an den Hauptseiten 118ₐ und/oder 118_{b} befestigt sind, hier aber exemplarisch als einstückig durch beispielsweise Spritzguss oder dergleichen so hergestellt dargestellt ist, dass Linsen an den beiden Seiten 118ₐ und 118_{b} geformt sind, wie wohl natürlich auch abgeformte Linsen anderen Materials als das Material des parallelepipedförmigen Substrats 118 möglich wären sowie Linsen an nur einer der Seiten 118ₐ und 118_{b}. Beide Substrate sind transparent und werden von den Strahlengängen durchdrungen, und zwar durch die Hauptseiten 18ₐ und 18_{b} bzw. 118ₐ und 118_{b} hindurch.Obige Ausführungsbeispiele lassen sich also in Form einer Multiaperturabbilungsvorrichtung implementieren, und zwar mit einzeiliger Kanalanordnung, wobei jeder Kanal ein Teilgesichtsfeld eines Gesamtgesichtsfeld übertragt und sich die Teilgesichtsfelder teilweise überlappen. Ein Aufbau mit mehreren der solchen Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein. Die zusammenhängende Zeile könnte identische Aktoren und ein gemeinsames Strahlumlenkelement nutzen. Ein oder mehrere eventuell im Strahlengang vorhandene verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkvorrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z.B. auf einer Leiterplatte nebeneinander angeordnet sind. Ein Autofokusantrieb kann so ausgeführt sein, dass das Strahlumlenkelement synchron mit den Optiken bewegt wird, oder ruhend ist.

## Patentansprüche

1. Multiaperturabbildungsvorrichtung mit:
einem einzeiligen Array (14) von nebeneinander angeordneten optischen Kanälen (14₁, 14₂, 14₃, 14₄), wobei jeder optische Kanal eine Optik (16₁, 16₂, 16₃, 16₄) zur Abbildung eines jeweiligen Teilgesichtsfeldes (30₁ - 30₄) eines Gesamtgesichtsfeldes (28) der Multiaperturabbildungsvorrichtung auf einen jeweils zugeordneten Bildsensorbereich (12₁ - 12₄) eines Bildsensors (12) umfasst;
wobei Linsen (72₁, 72₂, 72₃, 72₄) der Optiken der optischen Kanäle in Öffnungen (75₁, 75₂, 75₃, 75₄) eines oder mehrerer Linsenhalter (76₁, 76₂, 76₃, 76₄) gehaltert und der eine oder die mehreren Linsenhalter (76₁, 76₂, 76₃, 76₄) an einem Substrat (18) des Arrays (14) befestigt sind, so dass die Linsen über das Substrat mechanisch verbunden und Linsenscheitel der Linsen von dem Substrat (18) beanstandet sind, wobei die Linsen über das Substrat (72₁, 72₂, 72₃, 72₄) untereinander in konstanter relativer Lage gehaltert sind wobei das Substrat transparent ausgeführt ist, und Strahlengänge (22₁, 22₂, 22₃, 22₄) der Mehrzahl von optischen Kanälen durch das Substrat verlaufen;
eine Strahlumlenkvorrichtung (24) zum Umlenken eines Strahlengangs der optischen Kanäle;
wobei das Substrat (18) plattenförmig gebildet ist; und
wobei der der eine oder die mehreren Linsenhalter (76₁, 76₂, 76₃, 76₄) auf der Hauptseite des Substrats montiert sind; und die Hauptseite (18_{b}) dem Bildsensor (12) zugewandt oder abgewandt ist;
wobei der Linsenhalter einen Rahmen bereitstellt, der in einer Ebene der Strahlengänge zwischen dem Bildsensor (12) und der Strahlumlenkvorrichtung verläuft; und
wobei der eine oder die mehreren Linsenhalter (76₁, 76₂, 76₃, 76₄) röhrenförmig und axial verlaufend gebildet ist/sind und die Optiken gegenseitig an einer Innenseite des jeweiligen Linsenhalters fixiert sind;
wobei die Multiaperturabbildungsvorrichtung einen Aktor (54) zum translatorischen Bewegen des Substrats (18) entlang der Strahlengänge (22₁, 22₂, 22₃, 22₄) der Mehrzahl von optischen Kanälen aufweist; und die Optiken (16₁, 16₂, 16₃, 16₄) auch relativ zu der Strahlumlenkvorrichtung in konstanter relativer Lage gehaltert sind; und der Aktor (54) die Optiken (16₁, 16₂, 16₃, 16₄)zusammen mit der Strahlumlenkvorrichtung (24) translatorisch entlang der optischen Achsen der Optiken bewegt.

2. Multiaperturabbildungsvorrichtung gemäß Anspruch 1, bei der die Optiken in einer zylindrischen Innenseite des einen oder mehreren Linsenhalter (76₁, 76₂, 76₃, 76₄) befestigt sind.

3. Multiaperturabbildungsvorrichtung gemäß Anspruch 2, wobei der eine oder die mehreren Linsenhalter (76₁, 76₂, 76₃, 76₄) einen sich entlang der jeweiligen optischen Achsen ändernden Querschnitt aufweisen.

4. Multiaperturabbildungsvorrichtung gemäß einem der vorangehenden Ansprüche, wobei sich optische Kanäle gruppenweise einen Linsenhalter teilen.

5. Multiaperturabbildungsvorrichtung gemäß einem der vorangehenden Ansprüche, ferner umfassend eine Einrichtung (50), die ausgebildet ist, um mit Winkelverstellungen der Strahlumlenkeinrichtung das Gesamtgesichtsfeld (28), das durch die Gesamtabdeckung der Teilgesichtsfelder (30₁ - 30₄) definiert wird, in seiner Richtung zu verändern.

6. Multiaperturabbildungsvorrichtung gemäß einem der vorangehenden Ansprüche, wobei die Strahlumlenkvorrichtung (24) ein beidseitig reflektives Spiegelarray ist, und ausgebildet ist, um durch Rotation das Gesamtgesichtsfeld in zueinander entgegengesetzten Richtungen relativ zu der Vorrichtung zu erfassen.

7. Multiaperturabbildungsvorrichtung gemäß einem der vorangehenden Ansprüche, wobei die Optiken der optischen Kanäle ferner weitere Linsen (70₁, 70₂, 70₃, 70₄) aufweisen, die auf einer der Hauptseite (18_{b}) des Substrats gegenüberliegenden weiteren Hauptseite (18ₐ) des Substrats abgeformt sind.

8. Multiaperturabbildungsvorrichtung gemäß Anspruch 7, wobei die weiteren Linsen (70₁, 70₂, 70₃, 70₄) auf der der Hauptseite (18_{b}) des Substrats gegenüberliegenden weiteren Hauptseite (18ₐ) im Mehrfachnutzen abgeformt sind, während die Befestigung der Linsen (72₁, 72₂, 72₃, 72₄) der Optiken der optischen Kanäle an der Hauptseite (18_{b}) des Substrats (18) durch den einen oder die mehreren Linsenhalter (76₁, 76₂, 76₃, 76₄) durch Linsenhalter-individuell bewerkstelligt ist.

9. Multiaperturabbildungsvorrichtung gemäß einem der Ansprüche 1 bis 8, bei der die Optiken der optischen Kanäle ferner weitere Linsen (73₁, 73₂, 73₃, 73₄) aufweisen, die auf einer der Hauptseite (18_{b}) des Substrats gegenüberliegenden weiteren Hauptseite (18ₐ) des Substrats über weitere Linsenhalter (77₁, 77₂, 77₃, 77₄) befestigt und über das Substrat mechanisch verbunden sind.

10. Multiaperturabbildungsvorrichtung gemäß einem der vorhergehenden Ansprüche,
bei der das Substrat in einer Zeilenerstreckungsrichtung des einzeiligen Arrays (70) neben dem Substrat über eine Einrichtung (52) aufgehängt ist, die ausgebildet ist, um das Substrat (18) und damit die Optiken (16₁ - 16₄) translatorisch entlang der Zeilenerstreckungsrichtung zu bewegen, um durch die Bewegung (53) entlang der Zeilenerstreckungsrichtung eine Bildstabilisierung entlang der Zeilenerstreckungsrichtung zu erzielen;
wobei die Multiaperturabbildungsvorrichtung eine Einrichtung (50) aufweist, die vorgesehen ist, um die Strahlumlenkvorrichtung (24) zu drehen, um Verwacklungen der Multiaperturabbildungsvorrichtung während einer Aufnahme und senkrecht zur Zeilenerstreckungsrichtung auszugleichen.

11. Multiaperturabbildungsvorrichtung gemäß einem der vorhergehenden Ansprüche,
die ferner einen Aktor (52) zum translatorischen Bewegen des Substrats (18) entlang einer Zeilenerstreckungsrichtung des einzeiligen Arrays aufweist, wobei der Aktor (52) von einer optischen Bildstabilisierungssteuerung der Multiaperturabbildungsvorrichtung gesteuert ist;
wobei die Multiaperturabbildungsvorrichtung ferner einen weiteren Aktor (50) zur Erzeugung einer Rotationsbewegung der Strahlumlenkvorrichtung (24) aufweist, der ferner von der optischen Bildstabilisierungssteuerung der Multiaperturabbildungsvorrichtung gesteuert ist, so dass durch die translatorische Bewegung des Substrats (18) eine Bildstabilisierung entlang einer ersten Bildachse und durch die Erzeugung der Rotationsbewegung der Strahlumlenkvorrichtung eine Bildstabilisierung entlang einer zweiten Bildachse bewirkt wird.

12. Multiaperturabbildungsvorrichtung gemäß einem der vorangehenden Ansprüche, bei der der Aktor (54) zum translatorischen Bewegen des Substrats (18) entlang der Strahlengänge (22₁, 22₂, 22₃, 22₄) der Mehrzahl von optischen Kanälen von einer Fokussteuerung der Multiaperturabbildungsvorrichtung gesteuert ist.

13. Multiaperturabbildungsvorrichtung gemäß einem der vorhergehenden Ansprüche, die Hauptseite (18_{b}) und/oder eine der Hauptseite (18_{b}) des Substrats gegenüberliegenden weiteren Hauptseite (18ₐ) an Stellen, an denen das Substrat von den Strahlengängen (22₁, 22₂, 22₃, 22₄) der Mehrzahl von optischen Kanälen durchdrungen wird, eine Blende oder eine Filterschicht aufweist.

14. Multiaperturabbildungsvorrichtung gemäß einem der vorhergehenden Ansprüche, bei der weitere Linsen der Optiken der optischen Kanäle über ein weiteres Substrat (118) mechanisch verbunden sind, wobei das Substrat und das weitere Substrat hintereinandergeschaltet sind und beide von den Strahlengängen (22₁, 22₂, 22₃, 22₄) der Mehrzahl von optischen Kanälen durchdrungen werden.

## Claims

1. A multi-aperture imaging device comprising:
a one-line array (14) of adjacently arranged optical channels (14₁, 14₂, 14₃, 14₄), each channel including optics (16₁, 16₂, 16₃, 16₄) for projecting a respective partial field of view (30₁ - 30₄) of a total field of view (28) of the multi-aperture imaging device on a respectively associated image sensor region (12₁ - 12₄) of an image sensor (12);
wherein lenses (72₁, 72₂, 72₃, 72₄) of the optics of the optical channels are held within openings (75₁, 75₂, 75₃, 75₄) of one or more lens holders (76₁, 76₂, 76₃, 76₄) and the one or more lens holders (76₁, 76₂, 76₃, 76₄) are attached to a substrate (18) of the array (14) so that the lenses are mechanically connected via the substrate and that lens vertices of the lenses are spaced apart from the substrate (18), the lenses being held in a constant relative location with respect to each other via the substrate (72₁, 72₂, 72₃, 72₄), the substrate being configured to be transparent, and optical paths (22₁, 22₂, 22₃, 22₄) of the plurality of optical channels passing through the substrate;
a beam-deflecting device (24) for deflecting an optical path of the optical channels;
wherein the substrate (18) is configured to be plate-shaped; and
wherein the one or more lens holders (76₁, 76₂, 76₃, 76₄) are attached to the main side of the substrate; and the main side (18_{b}) faces or faces away from the image sensor (12);
wherein the lens holder provides a frame passing within a plane of the optical paths between the image sensor (12) and the beam-deflecting device; and
wherein the one or more lens holders (76₁, 76₂, 76₃, 76₄) is/are formed to be tubular and formed axially, and the optics are fixed relative to each other at an interior face of the respective lens holder;
wherein the multi-aperture imaging device comprises an actuator (54) for translationally moving the substrate (18) along the optical paths (22₁, 22₂, 22₃, 22₄) of the plurality of optical channels; and the optics (16₁, 16₂, 16₃, 16₄) are also held in a constant relative location with respect to the beam-deflecting device; and the actuator (24) moves the optics (16₁, 16₂, 16₃, 16₄) in a translational manner along the optical axes of the optics, together with the beam-deflecting device (24).

2. The multi-aperture imaging device according to claim 1, wherein the optics are attached in a cylindrical interior face of the one or more lens holders (76₁, 76₂, 76₃, 76₄).

3. The multi-aperture imaging device according to claim 2, wherein the one or more lens holders (76₁, 76₂, 76₃, 76₄) comprise a cross-section changing along the respective optical axes.

4. The multi-aperture imaging device according to any one of the preceding claims, wherein optical channels in groups share a lens holder.

5. The multi-aperture imaging device according to any one of the preceding claims, further comprising means (50) configured to change, with angle adjustments of the beam-deflecting element, the total field of view (28), which is defined by the total coverage of the partial fields of view (30₁ to 30₄), in terms of its direction.

6. The multi-aperture imaging device according to any one of the preceding claims, wherein the beam-deflecting device (24) is a mirror array reflecting on both sides, and is configured to capture the total field of view in opposing directions relative to the device by rotation.

7. The multi-aperture imaging device according to any one of the preceding claims, wherein the optics of the optical channels comprise further lenses (70₁, 70₂, 70₃, 70₄) molded on a further main side (18ₐ) of the substrate, which is located opposite the main side (18_{b}) of the substrate

8. The multi-aperture imaging device according to claim 7, wherein the further lenses (70₁, 70₂, 70₃, 70₄) are molded, in multi-use, on the further main side (18ₐ), which is located opposite the main side (18_{b}) of the substrate, whereas the attachment of the lenses (72₁, 72₂, 72₃, 72₄) of the optics of the optical channels to the main side (18_{b}) of the substrate (18) is individually accomplished by the one or more lens holders (76₁, 76₂, 76₃, 76₄).

9. The multi-aperture imaging device according to any one of claims 1 to 8, wherein the optics of the optical channels comprise further lenses (73₁, 73₂, 73₃, 73₄), which are attached on a further main side (18ₐ) of the substrate, which is located opposite the main side (18_{b}) of the substrate, via further lens holders (77₁, 77₂, 77₃, 77₄) and are mechanically connected via the substrate.

10. The multi-aperture imaging device according to any one of the preceding claims, wherein the substrate is suspended in a line extension direction of the one-line array (70) next to the substrate via means (52) configured to move the substrate (18) and thus the optics (16₁ - 16₄) along the line extension direction in a translational manner in order to, through the movement (53) along the line extension direction, achieve an image stabilization along the line extension direction;
wherein the multi-aperture imaging device comprises means (50) provided to rotate the beam-deflecting device (24) to compensate blurring of the multi-aperture imaging device while taking a picture and perpendicularly to the line extension direction.

11. The multi-aperture imaging device according to any one of the preceding claims, further comprising an actuator (52) for translationally moving the substrate (18) along a line extension direction of the one-line array, wherein the actuator (52) is controlled by an optical image stabilization controller of the multi-aperture imaging device;
wherein the multi-aperture imaging device comprises a further actuator (50) for producing a rotational movement of the beam-deflecting device (24), which actuator is further controlled by the optical image stabilization controller of the multi-aperture imaging device such that the translational movement of the substrate (18) causes image stabilization along a first image axis and such that the generation of the rotational movement of the beam-deflecting device causes image stabilization along a second image axis.

12. The multi-aperture imaging device according to any one of the preceding claims, wherein the actuator (54) for translationally moving the substrate (18) along the optical paths (22₁, 22₂, 22₃, 22₄) of the plurality of optical channels is controlled by a focus controller of the multi-aperture imaging device.

13. The multi-aperture imaging device according to any one of the preceding claims, wherein the main side (18_{b}) and/or a further main side (18ₐ) located opposite the main side (18_{b}) of the substrate comprise a diaphragm or a filter layer at positions where the substrate is penetrated by the optical paths (22₁, 22₂, 22₃, 22₄) of the plurality of optical channels.

14. The multi-aperture imaging device according to any one of the preceding claims, wherein further lenses of the optics of the optical channels are mechanically connected via a further substrate (118), the substrate and the further substrate being connected in series, and both of them being penetrated by the optical paths (22₁, 22₂, 22₃, 22₄) of the plurality of optical channels.

## Revendications

1. Dispositif de reproduction à ouvertures multiples, avec:
un réseau de rangée unique (14) de canaux optiques disposés l'un à côté de l'autre (14₁, 14₂, 14₃, 14₄), où chaque canal optique comporte une optique (16₁, 16₂, 16₃, 16₄) destinée à reproduire un champ de vision partiel respectif (30₁ à 30₄) d'un champ de vision global (28) du dispositif de reproduction à ouvertures multiples sur une zone de capteur d'image associée respective (12₁ à 12₄) d'un capteur d'image (12);
dans lequel les lentilles (72₁, 72₂, 72₃, 72₄) des optiques des canaux optiques sont supportées dans les ouvertures (75₁, 75₂, 75₃, 75₄) d'un ou de plusieurs porte-lentilles (76₁, 76₂, 76₃, 76₄) et les un ou plusieurs porte-lentilles (76₁, 76₂, 76₃, 76₄) sont fixés à un substrat (18) du réseau (14) de sorte que les lentilles soient connectées mécaniquement par l'intermédiaire du substrat et que les sommets de lentille des lentilles soient distants du substrat (18), dans lequel les lentilles sont maintenues, par l'intermédiaire du substrat (72₁, 72₂, 72₃, 72₄), dans une position relative constante l'une par rapport à l'autre, dans lequel le substrat est réalisé transparent et les trajets de faisceaux (22₁, 22₂, 22₃, 22₄) de la pluralité de canaux optiques traversent le substrat;
un dispositif de déviation de faisceau (24) destiné à dévier un trajet de faisceau des canaux optiques;
dans lequel le substrat (18) est réalisé en forme de plaque; et
dans lequel l'un ou les plusieurs porte-lentilles (76₁, 76₂, 76₃, 76₄) sont montés sur la face principale du substrat; et la face principale (18_{b}) est orientée vers ou est opposée au capteur d'image (12);
dans lequel le porte-lentilles crée un cadre qui s'étend dans un plan des trajets de faisceau entre le capteur d'image (12) et le dispositif de déviation de faisceau; et
dans lequel l'un ou les plusieurs porte-lentilles (76₁, 76₂, 76₃, 76₄) est/sont réalisés de forme tubulaire et de manière à s'étendre axialement et les optiques sont fixées de manière réciproque à une face intérieure du porte-lentilles respectif;
dans lequel le dispositif de reproduction à ouvertures multiples présente un actionneur (54) destiné à déplacer le substrat (18) en translation le long des trajets de faisceau (22₁, 22₂, 22₃, 22₄) de la pluralité de canaux optiques; et les optiques (16₁, 16₂, 16₃, 16₄) sont également maintenues dans une position relative constante par rapport au dispositif de déviation du faisceau; et l'actionneur (54) déplace les optiques (16₁, 16₂, 16₃, 16₄) ensemble avec le dispositif de déviation de faisceau (24) en translation le long des axes optiques des optiques.

2. Dispositif de reproduction à ouvertures multiples selon la revendication 1, dans lequel les optiques sont fixées dans une face intérieure cylindrique des un ou plusieurs porte-lentilles (76₁, 76₂, 76₃, 76₄).

3. Dispositif de reproduction à ouvertures multiples selon la revendication 2, dans lequel les un ou plusieurs porte-lentilles (76₁, 76₂, 76₃, 76₄) présentent une section transversale qui varie le long des axes optiques respectifs.

4. Dispositif de reproduction à ouvertures multiples selon l'une des revendications précédentes, dans lequel les canaux optiques partagent un porte-lentilles par groupe.

5. Dispositif de reproduction à ouvertures multiples selon l'une des revendications précédentes, comportant par ailleurs un dispositif (50) qui est conçu pour modifier, par des réglages angulaires du dispositif de déviation de faisceau, le champ de vision global (28) qui est défini par la couverture globale des champs de vision partiels (30₁ à 30₄) quant à sa direction.

6. Dispositif de reproduction à ouvertures multiples selon l'une des revendications précédentes, dans lequel le dispositif de déviation de faisceau (24) est un réseau de miroirs réfléchissant des deux côtés et est conçu pour détecter par rotation le champ de vision global dans des directions opposées entre elles par rapport au dispositif.

7. Dispositif de reproduction à ouvertures multiples selon l'une des revendications précédentes, dans lequel les optiques des canaux optiques présentent par ailleurs d'autres lentilles (70₁, 70₂, 70₃, 70₄) qui sont formées sur une autre face principale (18ₐ) du substrat opposé à la face principale (18_{b}) du substrat.

8. Dispositif de reproduction à ouvertures multiples selon la revendication 7, dans lequel les autres lentilles (70₁, 70₂, 70₃, 70₄) sur l'autre face principale (18ₐ) opposée à la face principale (18_{b}) du substrat sont formées pour des usages multiples, tandis que la fixation des lentilles (72₁, 72₂, 72₃, 72₄) des optiques des canaux optiques à la face principale (18_{b}) du substrat (18) est réalisée de manière individuelle par porte-lentilles par l'un ou les plusieurs porte-lentilles (76₁, 76₂, 76₃, 76₄).

9. Dispositif de reproduction à ouvertures multiples selon l'une des revendications 1 à 8, dans lequel les optiques des canaux optiques présentent par ailleurs d'autres lentilles (73₁, 73₂, 73₃, 73₄) qui sont fixées à une autre face principale (18ₐ) du substrat opposée à la face principale (18ₐ) du substrat par l'intermédiaire d'autres porte-lentilles (77₁, 77₂, 77₃, 77₄) et connectées mécaniquement par l'intermédiaire du substrat.

10. Dispositif de reproduction à ouvertures multiples selon l'une des revendications précédentes, dans lequel le substrat est suspendu dans une direction d'extension de rangée du réseau à rangée unique (70) à côté du substrat par l'intermédiaire d'un dispositif (52) qui est conçu pour déplacer le substrat (18), et de ce fait les optiques (16₁ à 16₄), en translation dans la direction d'extension de rangée pour obtenir, par le déplacement (53) dans la direction d'extension de rangée, une stabilisation d'image dans la direction d'extension de rangée;
dans lequel le dispositif de reproduction à ouvertures multiples présente un dispositif (50) qui est prévu pour faire tourner le dispositif de déviation de faisceau (24) pour compenser les risques de bouger du dispositif de reproduction à ouvertures multiples pendant une prise de vue et perpendiculairement à la direction d'extension de rangée.

11. Dispositif de reproduction à ouvertures multiples selon l'une des revendications précédentes, présentant par ailleurs un actionneur (52) destiné à déplacer le substrat (18) en translation dans une direction d'extension de rangée du réseau à rangée unique, dans lequel l'actionneur (52) est commandé par une commande de stabilisation d'image optique du dispositif de reproduction à ouvertures multiples;
dans lequel le dispositif de reproduction à ouvertures multiples présente par ailleurs un autre actionneur (50) destiné à générer un mouvement de rotation du dispositif de déviation de faisceau (24), qui est par ailleurs commandé par la commande de stabilisation d'image optique du dispositif de reproduction à ouvertures multiples, de sorte que soit provoquée, par le déplacement en translation du substrat (18), une stabilisation d'image le long d'un premier axe d'image et, par la génération du déplacement en rotation du dispositif de déviation de faisceau, une stabilisation d'image le long d'un deuxième axe d'image.

12. Dispositif de reproduction à ouvertures multiples selon l'une des revendications précédentes, dans lequel l'actionneur (54) destiné à déplacer le substrat (18) en translation le long des trajets de faisceau (22₁, 22₂, 22₃, 22₄) de la pluralité de canaux optiques est commandé par une commande de focalisation du dispositif de reproduction à ouvertures multiples.

13. Dispositif de reproduction à ouvertures multiples selon l'une des revendications précédentes, dans lequel la face principale (18_{b}) et/ou une autre face principale (18ₐ) opposée à la face principale (18_{b}) du substrat présente, à des endroits auxquels le substrat est traversé par les trajets du faisceau (22₁, 22₂, 22₃, 22₄) de la pluralité de canaux optiques, un diaphragme ou une couche de filtre.

14. Dispositif de reproduction à ouvertures multiples selon l'une des revendications précédentes, dans lequel d'autres lentilles des optiques des canaux optiques sont connectées mécaniquement par l'intermédiaire d'un autre substrat (118), dans lequel le substrat et l'autre substrat sont connectés l'un derrière l'autre et sont tous deux traversés par les trajets de faisceau (22₁, 22₂, 22₃, 22₄) de la pluralité de canaux optiques.
